# EUROPEAN PATENT APPLICATION

(11) **EP 3 255 601 A1**
(43) Date of publication of application: **13.12.2017**
(21) Application number: 17174661.3
(22) Date of filing: 07.06.2017
(51) Int. Cl.: G06Q 30/02

(54) **A METHOD FOR USING DATA COLLECTED BY A MOBILE COMMUNICATION DEVICE FOR DETECTING STATE OF HUNGER IN A FOOD RECOMMENDATION SYSTEM**

(30) Priority: 07.06.2016 IL 24607916
(71) Applicant: Deutsche Telekom AG, 53113 Bonn (DE)
(72) Inventor: KETABDAR, Hamed, 10555 BERLIN (DE); PROHL, Matthias, 50674 KÖLN (DE); KATZ, Gilad, Rehovot (IL); SHABTAL, Asaf, 7684200 HULDA (IL); ELOVICI, Yuval, 7986400 D.N. Lachish (IL)
(74) Representative: Verriest, Philippe

(57) **Abstract**

Presented is invention is a method that uses a system for collecting data from a mobile communication device in order to detect the state of hunger of the user of the mobile communication device and to input that data into a coupon recommendation system. The method uses the collected data to determine the state of hunger and also to recognize if it is a real hunger or an emotional hunger.

## Description

### Field of the Invention

The invention is from the fields of mobile communication. Specifically the invention is from the field of recommendation processes that utilize the capabilities of mobile communication networks and devices to provide businesses with the ability to supply coupons to potential customers in a cost effective manner. More specifically the invention relates to a method for detecting state of hunger for use as input in a food recommendation system.

### Background of the Invention

A coupon is a document provided by a retailer, manufacturer, or service provider to potential customers that can be exchanged for a discount when purchasing a product or service. The purpose of the coupon is to entice price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile communication devices, being small computers that are always connected to the internet and carried by consumers, are increasingly being used for context-based recommendation. Existing applications for mobile communication devices push messages and coupons to the device owner mainly based on his location. However the mobile communication devices comprise sensors that provide mobile service providers with a great deal more information than just the location of the device holder. In addition to the users' location commonly used mobile communication devices comprise sensors that can provide information about many other attributes of the user and his/her surroundings such as degree of activity, application/s used, communication behavior, orientation of the device, data usage, incoming and outgoing call and messaging logs, location of friends, etc. In addition information about a specific user's social connections, e.g. "friends" in social networks, is readily available.

Recommendation processes are processes that enable a service provider to offer different to businesses the opportunity to promote their products or services by offering coupons/discounts/offers to their potential customers via an application on the potential customers' mobile communication devices. In order to be attractive to the business the applications must be designed to maximize the coupons/discounts/offers consumption while minimizing the cost to the businesses.

Recommendation processes and various aspects of recommendation processes that have been invented to achieve the goals described above are described in the following patent applications of the Applicant of the present application: US14/691,895; US14/734,038; US14/952,280; and US14/734,038.

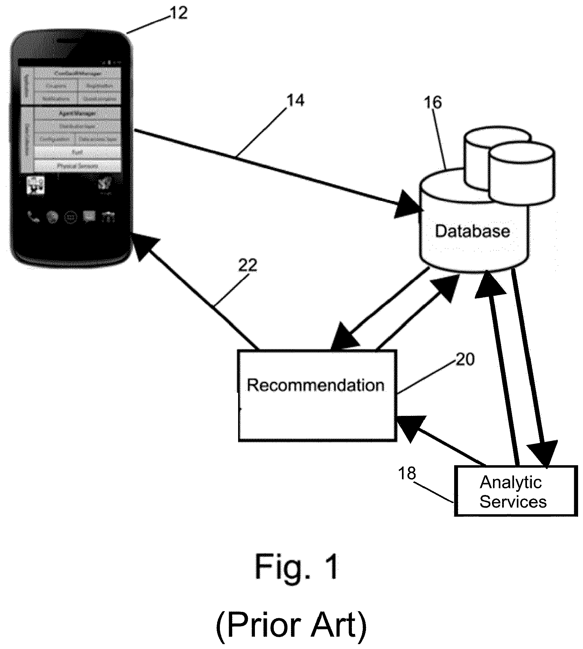

Fig. 1 schematically shows the main components of the system that executes the recommendation method described in the first of the references cited above. These components are:
- An application running on a user's mobile communication device 12. The application is responsible for collecting and sending sensor data and also interacts with the user showing him coupons recommended by the system.
- Sensor data 14 sent from mobile communication device 12 to the system data base 16.
- A database 16 that contains all user data including, for example, sensor information, coupons offered and coupons consumed.
- An analytics services module 18, which is a component that is responsible for deriving high level useful information from the sensor data. The analytics services module also includes data sources that are external to the system, e.g., current weather from an external web site and Facebook.
- A recommendation algorithm module 20, which executes the actual logic that ultimately decides which coupon to offer to the user. The input to this module includes the information derived by the analytics services module 18. The recommendation algorithm module 20 processes the information and selects the best offer 22 for the specific customer. This module is also responsible of updating the recommendation model based on previous offers and consumptions.

All components of the system, with the exception of the mobile communication devices can be housed in a single server that comprises at least one processor that comprises software that when executed causes the processor to carry out the various processes that result in the final recommendation. Alternatively the recommendation system can be configured as a collection of separate servers, each of which comprises a processor, software, and a local data storage unit. The software of each of these servers is designed to cause the server to carry out specific tasks and the servers communicate with each other, as shown in Fig. 1 in order to carry out the complete recommendation process. Conceptually it is more convenient to think of the system in the latter configuration.

Food recommendation systems send food coupons to users via their mobile communication devices. One of the challenges of food recommendation systems is to try to recognize a state of hunger of the user and to send coupons in a way that is correlated with the feeling of hunger of the user.

Prior art approaches which try to recognize a state of hunger of the users rely on external sensors, which measure chemicals indicating hunger, mainly through breath. For example, Japanese cellphone operator DoCoMo demonstrated a hunger analyzer system at the CEATEC JAPAN 2011 exhibition. The system consists of a smartphone mounted on a cradle attached to an acetone detector. Acetone is a compound that is released by the body when fat is metabolized, so the assumption is that the amount of acetone produced is an indication of the state of hunger. To get a reading, the user blows into a straw attached to the detector and a graphic exhibit on the smartphone displays the user's hunger level and the amount of fat being burned. This application can be used to schedule meals, workout sessions and measure the efficiency of exercises.

However, employing external sensors is complicated, expensive, and not a feasible technique for use with a food coupon recommendation system that has to be provided with data that can be used to determine a person's state of hunger essentially 24 hours a day. A very desirable alternative to the use of external sensors would be a system and method which recognizes the state of hunger of a user, based only on information and data which is readily available from the sensors and logs on regular smart phones.

In addition to the recognition of the state of hunger, an ability to observe the type of hunger and to differentiate between real hunger and emotional hunger can be very useful to the recommendation system.

It is a purpose of the present invention to provide a method for detecting a state of hunger of the user based on information and data which are available from sensors and data logs that are integrated into the electrical circuits of regular smartphones.

It is another purpose of the present invention provide a method for differentiating between real hunger and emotional hunger.

Further purposes and advantages of this invention will appear as the description proceeds.

### Summary of the Invention

A method of using a system comprising a processor containing software algorithms including machine learning algorithms and a database to determine the state of hunger of a user of a mobile communication device from data collected from the mobile communication device comprises a training stage and an operational stage.

The training stage comprises:
i) sending data from mobile communication devices and contextual data relative to the environment to the database;
ii) executing software algorithms in the processor to extract attributes that can be used by machine learning algorithms from the data sent from the mobile communication devices and stored in the database;
iii) executing software algorithms in the processor to extract meta-attributes that are related to the emotional state and mood of the user from the data sent from the mobile communication devices and stored in the database;
iii) creating labels related to the hunger state of the users by the use of questionnaires in a controlled user study carried out in parallel to data collection from the mobile communication devices or by observing the users consumption of coupons offered to them;
iv) inputting the attributes and the corresponding labels into a machine learning algorithm in the software of the processor in order to create and train a statistical model that models the correlation between the data collected and the state of the "real hunger" of the user;
v) inputting the meta-attributes and the corresponding labels into a machine learning algorithm in the software of the processor in order to create and train a statistical model that models the correlation between the data collected and the state of the "emotional hunger" of the user;

The operational stage comprises:
i) sending data and contextual data relative to the environment from a user's mobile communication device to the database;
ii) executing a software algorithm in the processor to extract attributes that can be used by machine learning algorithms from the data sent from the mobile communication device and stored in the database;
iii) executing a software algorithm in the processor to extract meta-attributes that are related to the emotional state and mood of the user from the data sent from the mobile communication device and stored in the database;
iv) executing a software algorithm in the processor to compare the attributes with the trained statistical model for "real hunger" to estimate a score indicating the "real hunger" level of the user;
v) executing a software algorithm in the processor to compare the meta-attributes with the trained statistical model for "emotional hunger" to estimate a score indicating the "emotional hunger" level of the user;
vi) executing a software algorithm in the processor to compare the scores for "emotional hunger" to those for "real hunger" to obtain a ratio for emotional/real hunger of the user.

In embodiments of the method the ratio for emotional/real hunger of the user is sent to the recommendation module in a recommendation system and used as input to the software algorithms in this module that determine which coupons to offer to the user.

In embodiments of the method location data obtained from a mobile communication device is used by the recommendation system to infer the proximity of various service providers associated with the coupon service.

In embodiments of the method data that can be obtained from a mobile communication device includes at least one of:
i) voice data captured by a microphone on the mobile communication device;
ii) motion data indicative of the way the user moves and the way he/she tilts the mobile communication device that is captured by at least one accelerometer or gyroscope that is integrated into the mobile communication device;
iii) data correlated with the way the user operates the mobile communication device including at least one of: touching the screen, typing quality, speed, and calling mobile applications;
iv) location data captured by a GPS sensor integrated into the mobile communication device;
v) contextual data related to the environment including at least one of: time, date, temperature, and weather conditions;
vi) information about known friends who move in certain patterns; and
vii) previous information about times the users usually eats.

In embodiments of the method the motion data is analyzed to extract the attributes and meta-attributes that are used by the machine learning algorithms. In these embodiments of the method analyzing the motion data can include transformation of the data by using Fourier Transformation.

In embodiments of the method the voice data is analyzed to infer expressions of anger, frustration or boredom from the tone of the user's speech. In these embodiments of the method the waveform of the sound is transformed into meta-attributes that are used by the machine learning algorithms. In these embodiments of the method the waveform of the sound can be transformed by using a Fourier transformation.

Embodiments of the method can be extended beyond a predictive recommendation and used for healthcare purposes. In these embodiments of the method the processor of the system can use the ratio for emotional/real hunger to send a warning to the user that can help the user to control the urge to indulge in excessive emotional eating.

In embodiments of the method the system can be provided in one of the following ways:
i) the software is installed on the mobile communication device and the processing and data storage components of the mobile communication device are utilized to carry out the method;
ii) the software is loaded into either the analytic services module or the recommendation module of a recommendation system and the processors and database of the recommendation system are utilized to carry out the method; and
iii) the processor and database are a dedicated physical system that is in communication with the mobile communication device to receive the data and with the recommendation module in a recommendation system.

All the above and other characteristics and advantages of the invention will be further understood through the following illustrative and non-limitative description of embodiments thereof, with reference to the appended drawings.

### Brief Description of the Drawings

- Fig. 1 schematically shows the main components of the a prior art recommendation system; and
- Fig. 2 schematically shows a flowchart of the method of the invention.

### Detailed Description of Embodiments of the Invention

The invention is a method that uses a system for collecting data from a mobile communication device in order to detect the state of hunger of the user of the mobile communication device and to input that data into a coupon recommendation system. The method uses the collected data to determine the state of hunger and also to recognize if it is a real hunger or an emotional hunger. Differentiating between real and emotional hunger allows the software in the processor of the system to improve the recommendation process by, for example, offering a user with a real hunger a coupon for a full meal, and offering a user with an emotional hunger a coupon for a food which is known as a comfort food such as ice cream.

As part of the input to the decision making process the algorithms of the present invention utilize the physiological effects that are associated with hunger. For example, hunger can be associated with a drop of blood sugar level, which affects contraction of muscles contributing to the production of speech through the vocal tract. Hunger can also be associated with other states, e. g. stress which can influence characteristics of voice as well. Apart from muscles in the vocal tract, other muscles contributing to physical movements can also be affected by blood sugar level and stress. In addition to analyzing properties of the voice such as frequency and pitch other hunger related information can be deduced from other data supplied by the sensors on the mobile communication device that are related to such phenomenon as the way the user moves and the way he/she tilts the mobile communication device. For example a who is working on a frustrating task shifts in his seat and decides to get up and get a cup of coffee In another example it is around noon and a person begins shifting in his seat, walking around looking for other people who wants to go out or picks up the phone to send a text message to friends in order to schedule lunch.

In a mobile communication device scenario, voice data is captured by the microphone, and motion is captured by one or more accelerometers/gyroscopes that are integrated into the mobile communication device.

Other information that is readily available from the mobile communication device that is correlated with the user's state of hunger includes: information about known friends who move in certain patterns; previous information about times the users usually eats (lack of an indication that the user has eaten at the time that he/she usually is known to eat means that he/she is probably hungry); and location.

The software algorithms in the processor of the system build models that are trained to analyze the speech and accelerometer data to detect patterns associated with hunger and type of food desire. In addition, hunger can be correlated with the way the user operates the mobile communication device in terms of touching the screen, typing quality and speed, as well calling mobile applications. The result of analyzing all of these factors will enable the recommendation system to offer the user a coupon that has a very high probability of being used. For instance, if it is determined that the user is experiencing a state of hunger brought on by high stress, the recommendation system could offer coupons to a nearby candy store and/or fast food establishment since it is known that stress is associated with an appetite for chocolate and fast food.

In addition to "real hunger", which is associated with drop of blood sugar level, there is also a type of food desire which is usually referred as "emotional eating or hunger". People do not always eat simply to satisfy hunger. People also turn to food for comfort, stress relief, or as a reward.

The hunger levels determined by the system and method of the invention correlate better with "real hunger", although they provide a good indication for "emotional hunger" as well. The hunger levels determined by the system and method of the invention assist a food recommendation system to suggest coupons by enabling detection of both states of hunger.

As said above, the system and method of the invention collect data from mobile communication devices through different sources including location, voice, motion and operation of the device. Some contextual data related to the environment such as time, date, temperature, as well as weather conditions can be included as well. The data is then compressed by extracting attributes which can be more discriminative in correlation to hunger as compared to the original data and are used in machine learning algorithms to build statistical models.

Examples of attributes that can be obtained from the data supplied by sensors on the mobile communication device are:
1) Location data- can be used *inter alia* to infer temperature and the proximity of various service providers associated with the coupons service.
2) Accelerometer data - the movement patterns of the user can be indicative of multiple scenarios. Analyzing "micro movements" done by the user and extracting and transformation of information (for example by using Fourier Transform) is used to extract attributes relative to hunger detection that can be used by multiple types of ML algorithms.
   This can be applied to both types of hunger- physical and emotional:
   a) Physical hunger - a drop in blood sugar may cause a user to become more nervous, causing him/her to change his/her movement patterns: shifting in their seat, taking out the phone to check the time or to call a friend, and pacing in the room are all possible results of hunger that can be characterized by the user's movements and represented as attributes.
   b) Emotional hunger - emotional hunger can be triggered in a large variety of scenarios. As an example, assume that a person is tasked with carrying out a difficult and/or frustrating task. This person is likely to be annoyed by the process and look for "excuses" for a break - going out to get coffee or to buy a snack (either alone or with office mates) are common "escape routes". Both components of this scenario - the frustration and the approaching of colleagues to join the coffee shopping - can be characterized by the user's movements and represented as attributes.
3) Sound analysis - the mobile communication device's microphones can be used to collect information about the user's mood and interactions with their surroundings. Expressions of anger, frustration or boredom can be inferred from their tone. Similarly to the transformation performed on the data collected from the accelerometer sensors, the waveform of the sound can be transformed into features that are usable by machine learning algorithms (Fourier Transform is one common method for such a transformation).

In a training stage after the attributes are extracted from the data obtained from the mobile communication device, they are used in order to create a statistical model which models correlation between different data collected and the state of hunger of the user. Different types of model can be created. Data gathered for many users can be used to create a general model that can be used to predict the hunger state of individuals. However, if enough information has been collected over a long enough period of time for a specific user, then a model can be created for that individual that will provide a more accurate prediction of his/her state of hunger than that which can be obtained using the general model.

In order to create such the models during the training stage the collected data should be labeled as either a "hunger state" or a "normal state". The labels can be obtained through questionnaires in a controlled user study in parallel to the data collection from the mobile communication devices or by observing users consuming food coupons.

After the statistical model is trained using data from the mobile communication device and labels, it can be used for detecting the state of hunger. New data collected from the mobile communication devices is compared with the trained model to estimate a score indicating the hunger level of the user. The score can be a normalized score between 0 and 1. The level of the score itself can be used in order decide if for instance a complete meal should be offered or if something like a snack would be preferred.

In another aspect of the invention, the hunger detection deals more with the hunger connected with the emotional state of the user of the mobile communication device. It is a well-known fact that negative and positive emotions can be highly correlated with the feeling of hunger and food cravings. In this approach, attributes extracted from contextual data as described herein above are used for recognizing emotional status and mood of the user. The mood and emotional attributes, known herein as meta-attributes, which are extracted in this way are then used to build a statistical model that shows correlation between user's mood and feeling of hunger. In order to train the statistical models hunger labels that distinguish between real and emotional hunger are obtained as described above through a controlled user study, or based on the consumption of coupons in the training phase are used.

Once the model is trained using meta-attributes, it can provide a score that shows the level of hunger. As mentioned before, this hunger score is more correlated with "emotional hunger".

Comparing the scores obtained with a statistical model relating to real hunger to those obtained with a statistical model relating to emotional hunger, yields a ratio for emotional/real hunger. Depending on the value of this ratio, different types of food can be recommended. In particular, if there is a very high probability that the hunger is emotional hunger, then the food recommendation system will send coupons for healthy or stress relieving food.

In some cases, the decision as to what coupon to suggest can also rely on external factors. If, for example, offering a coupon for addressing real hunger will be more profitable than offering a coupon to address emotional hunger, the system may suggest the former even if the probability of the latter being true is a little higher.

The hunger detection method can be extended beyond a predictive recommendation and used for healthcare purposes as well. As described herein above, the method is used to create statistical models for detecting both "real hunger" and "emotional hunger". Both types of model are used to produce hunger indicator scores, which can be compared in order to distinguish an emotional hunger from a real one. The processor of the system can then send a warning to the user that can help the user to control the urge to indulge in excessive emotional eating.

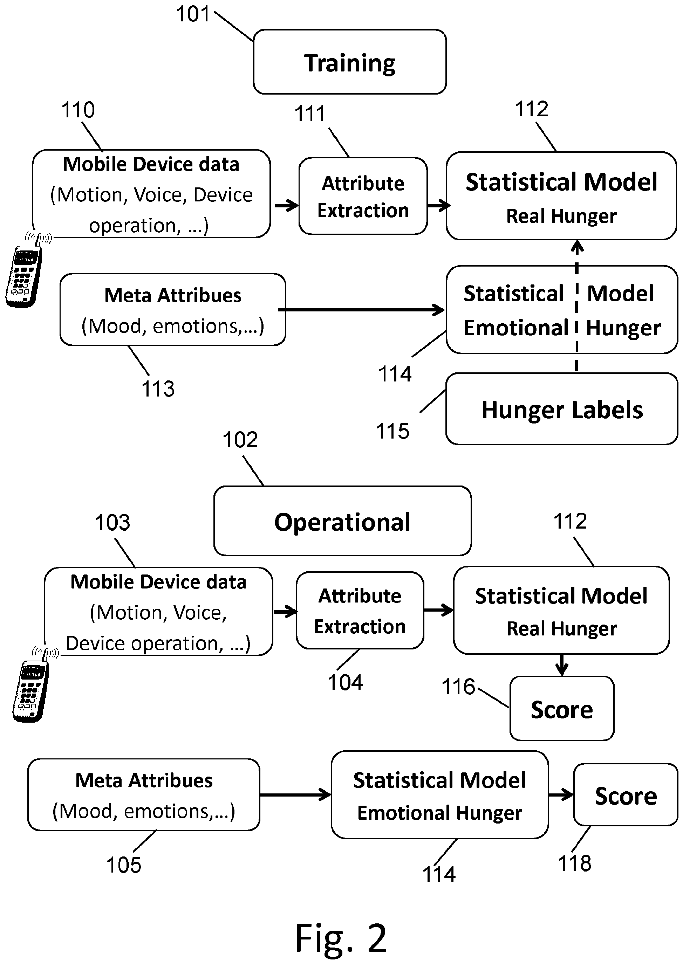

Fig. 2 is a schematic flowchart of the method of the invention. In the training phase 101, the first step 110 is to collect data from the mobile communication device relating to different parameters such as the voice, motion and device operation. Then the second step 111 is to extract attributes from the data collected from the mobile communication device and build a statistical model for the real hunger state in step 112. In parallel with step 111, in step 113 meta-attributes related to the mood and the emotions of the user are extracted from the data collected from the mobile communication device and in step 114 a statistical model is built for the emotional hunger state. In addition, in step 115 hunger labels are determined and obtained through questionnaires in a controlled user studies in parallel to data collection from the user's mobile communication devices or by observing the consumption of offered food coupons and relating the consumption results to the attributes of the coupon. For example, if coupons having a specific set of attributes are almost never consumed, it can be concluded that this set of attributes indicates that the user is not hungry.

The operational phase 102 of the method is very similar to the training phase. In step 103 data is collected from the mobile communication device. In step 104 attributes relating to real hunger are extracted from the mobile communication device data. In step 112 the attributes are fed into a statistical model that outputs a score 116 indicative of the probability that the user is in a real hunger state. In step 105 meta-attributes relating to emotional state and mood of the user are extracted from the mobile communication device data. In step 114 the meta-attributes are fed into a statistical model that outputs a score 118 indicative of the probability that the user is in an emotional hunger state.

The final step of the operational phase is to compare the scores 116 and 118 in order to determine the real state of hunger of the user. The algorithms in the recommendation module 20 of the recommendation system use the result of the comparison as one of the factors in making a decision about what coupon/s to offer the user according to the state of hunger detected.

The training and operational processes shown in Fig. 2 are carried out by a system comprising a processor that receives data from the mobile communication devices, a database to store the raw data and the statistical models, and dedicated software that is configured to extract the attributes and meta-attributes from the mobile communication device data, to build the statistical models, and to use the statistical modes to calculate the scores that are indicative of the state of hunger. The system can be provided in several different ways. In a first embodiment the software is installed on the mobile communication device and the processing and data storage components of the mobile communication device are utilized to carry out the method. In another embodiment the software can be loaded into either the analytic services module 18 or the recommendation module 20 of the recommendation system shown in Fig. 1 and the processors and database of the recommendation system are utilized to carry out the method. In yet another embodiment the processor and database are a dedicated physical system that is in communication with the mobile communication device to receive the data and with the recommendation module in a recommendation system to which the scores 116 and 118 are sent.

Although embodiments of the invention have been described by way of illustration, it will be understood that the invention may be carried out with many variations, modifications, and adaptations, without exceeding the scope of the claims.

## Claims

1. A method of using a system comprising a processor containing software algorithms including machine learning algorithms and a database to determine the state of hunger of a user of a mobile communication device from data collected from the mobile communication device, the method comprising a training stage and an operational stage, wherein:
a) the training stage comprises:
i) sending data from mobile communication devices and contextual data relative to the environment to the database;
ii) executing software algorithms in the processor to extract attributes that can be used by machine learning algorithms from the data sent from the mobile communication devices and stored in the database;
iii) executing software algorithms in the processor to extract meta-attributes that are related to the emotional state and mood of the user from the data sent from the mobile communication devices and stored in the database;
iii) creating labels related to the hunger state of the users by the use of questionnaires in a controlled user study carried out in parallel to data collection from the mobile communication devices or by observing the users consumption of coupons offered to them;
iv) inputting the attributes and the corresponding labels into a machine learning algorithm in the software of the processor in order to create and train a statistical model that models the correlation between the data collected and the state of the "real hunger" of the user; and
v) inputting the meta-attributes and the corresponding labels into a machine learning algorithm in the software of the processor in order to create and train a statistical model that models the correlation between the data collected and the state of the "emotional hunger" of the user;
b) the operational stage comprises:
i) sending data and contextual data relative to the environment from a user's mobile communication device to the database;
ii) executing a software algorithm in the processor to extract attributes that can be used by machine learning algorithms from the data sent from the mobile communication device and stored in the database;
iii) executing a software algorithm in the processor to extract meta-attributes that are related to the emotional state and mood of the user from the data sent from the mobile communication device and stored in the database;
iv) executing a software algorithm in the processor to compare the attributes with the trained statistical model for "real hunger" to estimate a score indicating the "real hunger" level of the user;
v) executing a software algorithm in the processor to compare the meta-attributes with the trained statistical model for "emotional hunger" to estimate a score indicating the "emotional hunger" level of the user; and
vi) executing a software algorithm in the processor to compare the scores for "emotional hunger" to those for "real hunger" to obtain a ratio for emotional/real hunger of the user.

2. The method of claim 1, wherein the ratio for emotional/real hunger of the user is sent to the recommendation module in a recommendation system and used as input to the software algorithms in this module that determine which coupons to offer to the user.

3. The method of claim 2, wherein location data obtained from a mobile communication device is used by the recommendation system to infer the proximity of various service providers associated with the coupon service.

4. The method of claim 1, wherein data that can be obtained from a mobile communication device includes at least one of:
i) voice data captured by a microphone on the mobile communication device;
ii) motion data indicative of the way the user moves and the way he/she tilts the mobile communication device that is captured by at least one accelerometer or gyroscope that is integrated into the mobile communication device;
iii) data correlated with the way the user operates the mobile communication device including at least one of: touching the screen, typing quality, speed, and calling mobile applications;
iv) location data captured by a GPS sensor integrated into the mobile communication device;
v) contextual data related to the environment including at least one of: time, date, temperature, and weather conditions;
vi) information about known friends who move in certain patterns; and
vii) previous information about times the users usually eats.

5. The method of claim 4, wherein the motion data is analyzed to extract the attributes and meta-attributes that are used by the machine learning algorithms.

6. The method of claim 5, wherein analyzing the motion data includes transformation of the data by using Fourier Transformation.

7. The method of claim 4, wherein the voice data is analyzed to infer expressions of anger, frustration or boredom from the tone of the user's speech.

8. The method of claim 7, wherein the waveform of the sound is transformed into meta-attributes that are used by the machine learning algorithms.

9. The method of claim 8, wherein the waveform of the sound is transformed by using a Fourier transformation.

10. The method of claim 1, wherein the method is extended beyond a predictive recommendation and used for healthcare purposes.

11. The method of claim 10, wherein the processor of the system uses the ratio for emotional/real hunger to send a warning to the user that can help the user to control the urge to indulge in excessive emotional eating.

12. The method of claim 1, wherein the system is provided in one of the following ways:
i) the software is installed on the mobile communication device and the processing and data storage components of the mobile communication device are utilized to carry out the method;
ii) the software is loaded into either the analytic services module or the recommendation module of a recommendation system and the processors and database of the recommendation system are utilized to carry out the method; and
iii) the processor and database are a dedicated physical system that is in communication with the mobile communication device to receive the data and with the recommendation module in a recommendation system.
